Europäisches Patentamt

European Patent Office

Office européen des brevets

(19)

(11) Numéro de publication: **0 190 066**
**A1**

(12) # DEMANDE DE BREVET EUROPEEN

(21) Numéro de dépôt: 86400053.4

(22) Date de dépôt: 10.01.86

(51) Int. Cl.⁴: **H02P 7/638**

(30) Priorité: 21.01.85 FR 8500805

(43) Date de publication de la demande:
06.08.86 Bulletin 86/32

(84) Etats contractants désignés:
BE DE GB IT

(71) Demandeur: **RONIC S.A.**
**61 bis, avenue de la Corniche Fleurie**
**F-06200 Nice(FR)**

(72) Inventeur: **Machuron, Robert**
**37, rue Louis Desautels**
**F-71230 Saint Vallier(FR)**

(74) Mandataire: **Martinet & Lapoux**
**62, rue des Mathurins**
**F-75008 Paris(FR)**

(54) **Variateur de vitesse pour moteur à courant alternatif.**

(57) Le variateur de vitesse (2) est destiné à un moteur à courant alternatif (1), tel que celui d'un robot ménager. Il comprend un élément commutateur contrôlable (3) et un circuit RC (4) de réglage de la vitesse de rotation du moteur à une vitesse prédéterminée. Le variateur est caractérisé en ce qu'il comprend un circuit (5) connecté à des bornes (47, 31) du condensateur (44, 45) du circuit de réglage et à une borne (21) du variateur (2) pour compenser une augmentation de courant afin de maintenir la vitesse prédéterminée du moteur quelles que soient les fluctuations du couple résistant du moteur pendant le fonctionnement de celui-ci.

EP 0 190 066 A1

Variateur de vitesse pour moteur à courant alternatif

La présente invention concerne un variateur de vitesse pour contrôler la vitesse d'un moteur universel ou à courant alternatif alimenté par une source de tension alternative afin de régler la vitesse de rotation du moteur à une vitesse prédéterminée constante.

Plus particulièrement, le variateur comprend un élément commutateur contrôlable par une électrode de commande et des moyens pour régler la vitesse de rotation du moteur à une vitesse prédéterminée. Les moyens pour régler comprennent une résistance ajustable et un condensateur connectés en série entre des bornes de l'élément commutateur et ayant une borne commune reliée à l'électrode de commande. En général, l'élément commutateur est un triac, formé par deux thyristors montés en antiparallèle, les bornes du triac constituant les bornes du variateur de vitesse.

Un tel variateur présente l'inconvénient principal que la vitesse de rotation du moteur diminue lorsque le couple résistant du moteur augmente. Cette diminution de vitesse perturbe ainsi l'utilisation du moteur à vitesse constante préréglée à ladite vitesse prédéterminée.

Le but de l'invention est d'obvier à l'inconvénient ci-dessus afin de maintenir la vitesse du moteur à une valeur relativement constante préréglée quelles que soient les fluctuations du couple résistant pendant le fonctionnement du moteur.

A cette fin, un variateur de vitesse selon l'invention est tel que défini dans la revendication 1.

Selon l'invention, l'augmentation de courant due à une augmentation du couple résistant est compensée en augmentant la tension d'alimentation du moteur grâce à une anticipation du déclenchement de l'élément commutateur à chaque alternance de la tension alternative. Selon une réalisation préférée, les moyens pour compenser comprennent au moins deux diodes en antiparallèle connectées chacune en série avec une première résistance entre ladite borne du variateur et ladite borne commune, et une seconde résistance entre ladite borne du variateur et une borne du condensateur reliée à une borne dudit élément commutateur.

Selon une autre caractéristique de l'invention, le variateur comprend des moyens pour bloquer l'élément commutateur lorsque la température de l'élément commutateur atteint une limite prédéterminée de fonctionnement, afin d'éviter un échauffement excessif du moteur par un couple résistant élevé et durable. De préférence, les moyens pour bloquer comprennent notamment une résistance à coefficient de température négatif qui peut être monté en parallèle avec ledit condensateur afin de court-circuiter le condensateur lorsque la température atteint la limite prédéterminée de fonctionnement.

D'autres caractéristiques de l'invention apparaîtront plus clairement à la lecture de la description suivante de plusieurs réalisations de l'invention en référence aux dessins annexés correspondants dans lesquels :

- la Fig.1 montre en détail un variateur de vitesse pour un moteur universel ou à courant alternatif selon une première réalisation : et

- la Fig.2 montre en détail un variateur de vitesse selon une seconde réalisation.

Dans les réalisations décrites ci-après, un moteur électrique universel ou à courant alternatif 1 auquel est accouplé un variateur de vitesse selon l'invention, est un petit moteur monophasé ayant une relative faible puissance, inclus dans un robot ménager. Dans un tel robot, le moteur entraîne à rotation un arbre auquel sont fixés un ou plusieurs organes, tels que couteaux, agitateurs, fouets ou analogues, disposés dans un récipient pour amincir, couper, hacher, battre, ou simplement mélanger des aliments crus ou cuits contenus dans le récipient. Aussi bien au démarrage du moteur qu'en cours de traitement des aliments, le moteur doit vaincre un couple résistant dépendant de la densité variable des aliments.

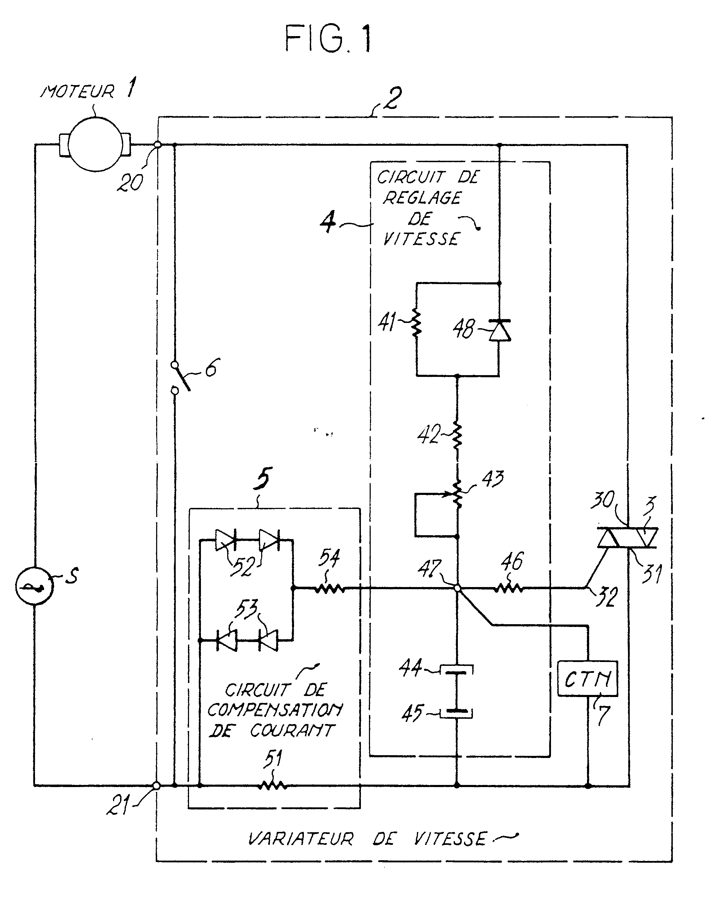

Comme montré à la Fig.1, un variateur de vitesse 2, inclus dans le robot précité, comprend un élément commutateur contrôlable formé par un triac 3, un circuit de réglage de vitesse 4 et un circuit de compensation de courant 5.

Deux bornes 30 et 31 du triac 3 sont respectivement reliées directement et à travers une résistance 51 du circuit 5, à deux bornes 20 et 21 du variateur 2. Comme montré dans la Fig.1, le variateur 2 est relié en série avec le moteur électrique 1 aux bornes d'une source de tension alternative S formée par le secteur à 220 volts et 50 Hz ; la borne 20 est reliée à une borne du moteur 1, et la borne 21 est reliée à une borne du secteur S.

Le circuit de réglage de vitesse 4, permet en agissant sur une électrode de commande 32 du triac 3, dite gâchette, de découper la tension alternative du secteur en une tension ayant une valeur efficace stabilisée lorsque le moteur fonctionne à vide, sans couple résistant, ou avec un couple résistant constant. Le circuit 4 comprend en série entre les bornes confondues 20 et 30 et la borne 31, une résistance 41, une seconde résistance 42, un potentiomètre 43 et deux condensateurs chimiques en série et en opposition 44 et 45. Les condensateurs 44 et 45 peuvent être remplacés par un unique condensateur non polarisé, mais plus onéreux. Le circuit 4 comprend également une troisième résistance 46 interconnectée entre la gâchette 32 et une borne 47 commune au potentiomètre 43 et au condensateur 44.

Le circuit 4 constitue ainsi un circuit à déphasage RC pour commander le triac à chaque alternance de la tension alternative. Les éléments en série 41 à 45 fixent le courant de conduction dans le triac 3 afin que la tension efficace d'alimentation du moteur 1 et donc la vitesse de rotation du moteur 1 soient constantes. La résistance 42 peut être remplacée par un potentiomètre commandé par un usager du robot précité afin de régler continûment ou graduellement la vitesse de fonctionnement du moteur 1 en fonction des aliments à traiter. Le potentiomètre 43 est réglé en usine pour une valeur minimale de la vitesse de rotation à vide du moteur 1. De préférence, une diode 48 est connectée en parallèle à la première résistance 47 et est passante dans le sens de la borne 47 vers la borne 20. La diode 48 équilibre la tension efficace entre alternances successives. La résistance 46 stabilise et limite le courant dans la gâchette 32 du triac.

Le circuit de compensation de courant 5 comprend, outre la résistance 51 déjà citée, deux paires de diodes montées en antiparallèle 52 et 53 et une seconde résistance 54 interconnectées en série entre les bornes 21 et 47. Les diodes 52 et 53 contribuent à anticiper le déclenchement du triac, via la résistance 54, respectivement pour les deux types d'alternance du courant. Corrolairement, la résistance 51 permet d'anticiper la décharge du condensateur 44 ou 45 à chaque alternance respective. La résistance 51 a une faible valeur ohmique et peut être, de préférence, constituée par un fil résistant ou par une piste conductrice de circuit imprimé.

Sachant que le couple résistant est proportionnel à chaque instant à l'intensité du courant, dès que le couple résistant du moteur 1 augmente et la vitesse du moteur diminue, l'accroissement du courant ainsi provoqué est automatiquement compensé par le circuit 5 qui augmente préalablement la tension en chargeant ou déchargeant le condensateur 44 ou 45 par anticipation à chaque alternance. L'augmentation de tension évite de caler le moteur et permet de maintenir la vitesse à une vitesse constante préréglée dans le circuit 4 au moyen de l'un des potentiomètres 42 et 43. Une telle compensation peut être due, par exemple, à l'épaississement progressif d'une crème ou d'une pâte alimentaire dans le récipient du robot ménager précité.

Le variateur de vitesse 2 comprend également un interrupteur 6 interconnecté entre le bornes 20 et 21 du variateur. Lorsque l'interrupteur 6 est fermé, le reste du variateur 2 est court-circuité et le moteur 1 est alimenté directement par le secteur pour permettre un fonctionnement à vitesse maximum du moteur.

De préférence, une résistance à coefficient de température négatif (CTN) 7 est incluse dans le variateur de vitesse 2 pour jouer le rôle d'un élément de sécurité lorsque le moteur 1 s'échauffe suite à un couple résistant élevé et donc à un courant trop élevé pendant une certaine durée. Selon la réalisation illustrée à la Fig.1, la résistance CTN 7 est connectée en parallèle avec les condensateurs 44 et 45, entre les bornes 47 et 31. Dans ce cas, le circuit de compensation 5 augmente la tension d'alimentation du moteur et accélère le moteur contrairement au but recherché, qui est de maintenir une vitesse constante. La résistance CTN 7 a alors une valeur ohmique diminuant rapidement par échauffement dû à l'augmentation de l'intensité du courant, ce qui court-circuite les condensateurs 44 et 45 et ainsi bloque le triac 3 via l'électrode de commande 32 pour arrêter le moteur trop chaud, c'est-à-dire lorsque la température du triac 3 atteint une limite prédéterminée de fonctionnement. Les fluctuations du couple résistant et donc du courant sont ainsi limitées. Selon une autre variante de la première réalisation montrée à la Fig.1, la résistance CTN 7 est reliée en série avec une résistance ajustable, tel qu'un potentiomètre, pour ajuster la limite prédéterminée de fonctionnement.

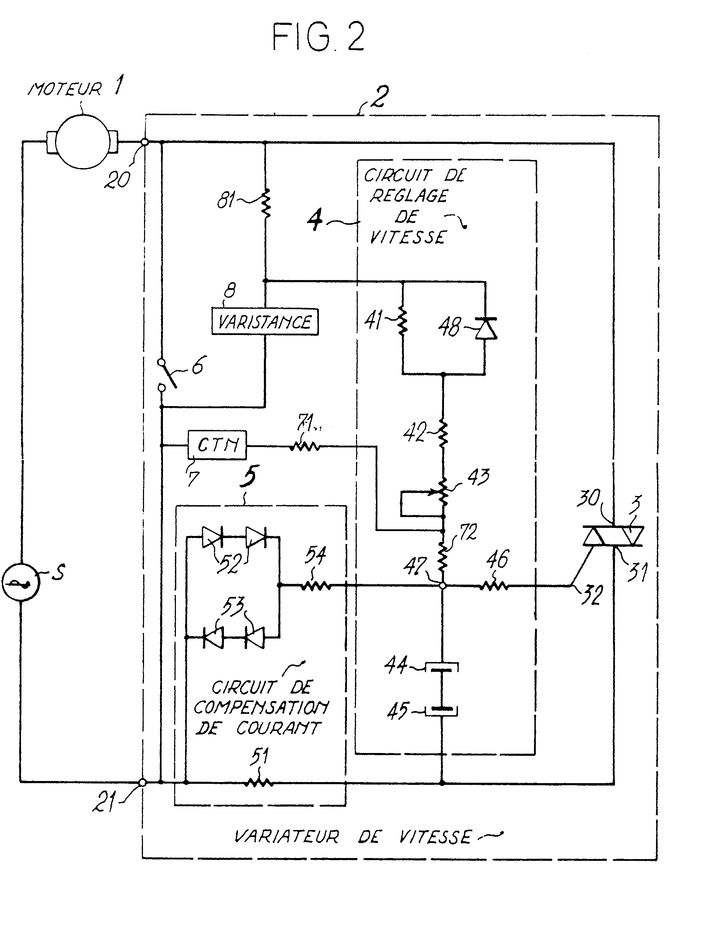

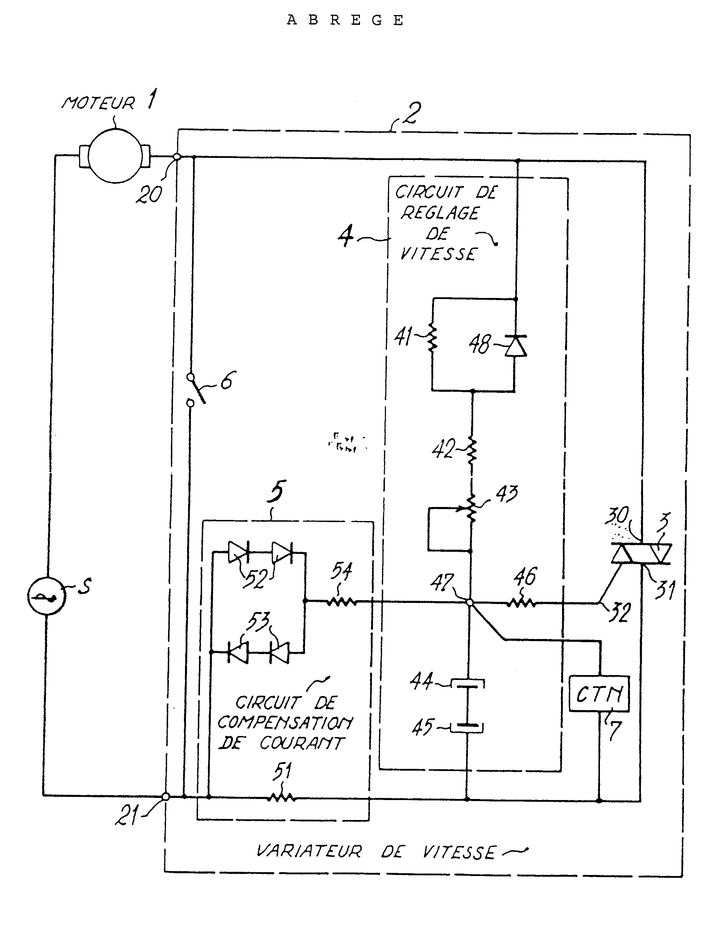

Selon une seconde réalisation montrée à la Fig.2, sensiblement analogue à celle décrite en référence à la Fig.1, une résistance à coefficient de température négatif 7 a une première borne reliée à la borne 21 du variateur de vitesse 2 et une seconde borne reliée à la borne 47 de préférence à travers un diviseur de tension à deux résistances 71 et 72. La résistance 71, de préférence ajustable, est interconnectée entre la seconde borne de la résistance CTN 7 et une borne commune au potentiomètre 43 et à la résistance 72. Une autre borne de la résistance 72 est reliée à la borne 47 commune aux résistances 54 et 46 et au condensateur 44, les résistances 42, 43 et 72 étant en série. Dans ce cas, la résistance CTN 7 influence la réaction du triac 3 dans le circuit de compensation 5 et contribue à une régulation thermique plus précise. La résistance 71 permet d'ajuster le seuil de sensibilité de la résistance CTN 7.

Comme montré à la Fig.2, le variateur de vitesse 2 peut également comprendre une varistance 8 et une résistance 81. La varistance 8 a une première borne reliée à la borne 21 du variateur de vitesse 2 et une seconde borne reliée à une borne commune aux résistances 41 et 81, reliée à la cathode de la diode 48. L'autre borne de la résistance 81 est reliée aux bornes confondues 20 et 30. La varistance 8 stabilise la tension d'alimentation du moteur 1 lorsque la tension alternative du secteur S varie pratiquement de ±10% environ.

## Revendications

1 - Variateur de vitesse pour un moteur à courant alternatif (1) relié en série avec le variateur (2) aux bornes d'une source de tension alternative (S), le variateur comprenant un élément commutateur (3) contrôlable par une électrode de commande (32) et des moyens (4) pour régler la vitesse du moteur (1) à une vitesse prédéterminée, lesdits moyens pour régler (4) comprenant une résistance ajustable (42, 43) et un condensateur (44, 45) connectés en série entre des bornes (30, 31) dudit élément commutateur (3) et ayant une borne commune (47) reliée à ladite électrode de commande (32), caractérisé en ce qu'il comprend des moyens (5) connectés à des bornes (47, 31) du condensateur (44, 45) et à une borne (21) du variateur (2) pour compenser une augmentation de courant lorsque le couple résistant du moteur (1) augmente afin de maintenir la vitesse du moteur à ladite vitesse prédéterminée.

2 - Variateur de vitesse conforme à la revendication 1, caractérisé en ce que les moyens pour compenser (5) comprennent au moins deux diodes en antiparallèle (52, 53) connectées en série avec une première résistance - (54) entre ladite borne (21) du variateur (2) et ladite borne commune (47), et une seconde résistance (51) entre ladite borne (21) du variateur et une borne du condensateur (44, 45) reliée à une borne (31) dudit élément commutateur (3).

3 - Variateur de vitesse conforme à la revendication 2, caractérisé en ce que la seconde résistance (51) a une valeur ohmique faible et est de préférence constituée par un fil résistant ou une piste de circuit imprimé.

4 - Variateur conforme à l'une quelconque des revendications 1 à 3, caractérisé en ce qu'il comprend des moyens - (7) pour bloquer ledit élément commutateur (3) lorsque la température de l'élément commutateur atteint une limite prédéterminée de fonctionnement.

5 - Variateur conforme à la revendication 4, caractérisé en ce que les moyens pour bloquer comprennent une résistance à coefficient de température négatif (7) en parallèle avec ledit condensateur (44, 45).

6 - Variateur conforme à la revendication 4, caractérisé en ce que les moyens pour bloquer comprennent une résistance à coefficient de température négatif (7) en série avec une résistance de préférence ajustable, toutes deux en parallèle avec ledit condensateur (44, 45).

7 - Variateur conforme à la revendication 4, caractérisé en ce que les moyens pour bloquer comprennent une résistance à coefficient de température négatif (7) interconnectée entre ladite borne (21) du variateur (2) et ladite borne commune (47).

8 - Variateur conforme à la revendication 7, caractérisé en ce que ladite résistance à coefficient de température négatif (7) est reliée à ladite borne commune (47) à travers un diviseur de tension de préférence ajustable et à deux résistances (71, 72).

9 - Variateur conforme à l'une quelconque des revendications 1 à 8, caractérisé en ce qu'il comprend une varistance (8) interconnectée entre ladite borne (21) du variateur - (2) et une autre borne (30, 20) commune à l'élément commutateur (3) et au variateur, de préférence à travers une résistance (81).

10 - Variateur conforme à l'une quelconque des revendications 1 à 9, caractérisé en ce que ladite résistance ajustable (42, 43) des moyens pour régler (4) comprend deux potentiomètres (42, 43) en série.

11 - Variateur conforme à l'une quelconque des revendications 1 à 10, caractérisé en ce que ladite résistance ajustable (42, 43) des moyens pour régler (4) est en série avec une résistance (41) et une diode (48) en parallèle.

12 - Variateur conforme à l'une quelconque des revendications 1 à 11, caractérisé en ce qu'il comprend une résistance (46) entre ladite borne commune (47) et ladite électrode de commande (32).

13 - Variateur conforme à l'une quelconque des revendications 1 à 12, caractérisé en ce que le condensateur est constitué par deux condensateurs chimiques (44, 45) en série et en opposition.

# FIG.1

MOTEUR *1*

*2*

CIRCUIT DE
REGLAGE
*4* DE
VITESSE

20

6

41 48

42

43

S

5

52 54 30 *3*

53 47 46 31

CTM 32

44

45 7

CIRCUIT DE
COMPENSATION
DE COURANT

51

21

VARIATEUR DE VITESSE

FIG.2

MOTEUR 1

2

CIRCUIT DE
REGLAGE
DE
VITESSE

81

8
VARISTANCE

41  48

6

71

CTM

42

7

5

43

52

54

72

47  46

30  3

31

32

S

53

44

45

CIRCUIT DE
COMPENSATION
DE COURANT

51

21

VARIATEUR DE VITESSE

20

A B R E G E

VARIATEUR DE VITESSE

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 095 073 (MARQUARDT GmbH)<br>* En entier * | 1 | H 02 P 7/638 |
| | --- | | |
| A | US-A-3 530 354 (G.J. GRANIERI et al.) | | |
| | --- | | |
| A | FR-A-2 227 669 (MOULINEX) | | |
| | ----- | | |

| | |
|---|---|
| | DOMAINES TECHNIQUES RECHERCHES (Int. Cl.4) |
| | H 02 P |

Le présent rapport de recherche a été établi pour toutes les revendications

| Lieu de la recherche | Date d'achèvement de la recherche | Examinateur |
|---|---|---|
| LA HAYE | 02-04-1986 | BEYER F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82